# EUROPEAN PATENT SPECIFICATION

(11) **EP 3 913 028 B1**
(45) Date of publication and mention of the grant of the patent: **09.09.2026**
(21) Application number: 20741226.3
(22) Date of filing: 16.01.2020
(51) Int. Cl.: C09J 4/06, C09J 11/06, C09J 175/06, C08F 2/44, C08F 2/50, C08G 18/10, C08G 18/30, C08G 18/44, C08G 18/73, C08G 18/76, C08F 283/00, C08G 18/20, C08G 18/48, C08G 18/71, C09J 175/04, C09J 175/16

(54) **CURABLE RESIN COMPOSITION AND CURED BODY**
HÄRTBARE HARZZUSAMMENSETZUNG UND GEHÄRTETER KÖRPER
COMPOSITION DE RÉSINE DURCISSABLE ET CORPS DURCI

(30) Priority: 18.01.2019 JP 2019007381; 02.08.2019 JP 2019143266
(43) Date of publication of application: 24.11.2021
(73) Proprietor: SEKISUI CHEMICAL CO., LTD., Osaka-shi Osaka 530-8565 (JP)
(72) Inventor: JO, Kon, Mishima-gun, Osaka 618-0021 (JP); YUUKI, Akira, Mishima-gun, Osaka 618-0021 (JP); KIDA, Takumi, Mishima-gun, Osaka 618-0021 (JP); TAMAGAWA, Tomokazu, Mishima-gun, Osaka 618-0021 (JP); HAGIWARA, Kouhei, Mishima-gun, Osaka 618-0021 (JP)
(74) Representative: Ter Meer Steinmeister & Partner
(86) International application number: PCT/JP2020/001367
(87) International publication number: WO 2020/149377

(56) References cited:
- WO-A1-2013/158621
- WO-A1-2015/146873
- WO-A1-2015/182697
- WO-A1-2015/190499
- WO-A1-2016/076407
- JP-A- 2003 313 531
- JP-A- 2003 313 531
- JP-A- 2003 327 647
- JP-A- 2014 122 299
- JP-A- 2015 120 323
- JP-A- 2015 137 359
- JP-A- 2020 002 261
- US-A- 4 038 239
- US-A1- 2014 303 330
- COVESTRO: "Desmodur HL BA", 9 January 2015 (2015-01-09), XP093111824, Retrieved from the Internet <URL:https://solutions.covestro.com/en/products/desmodur/desmodur-hl-ba_00130850-00009967?SelectedCountry=AD> [retrieved on 20231213]

## Description

### Technical Field

The present invention relates to cured bodies of curable resin compositions.

### Background Art

High integration and size reduction of electronic components such as semiconductor chips have been required in recent years. For examples, a plurality of thin semiconductor chips are bonded via an adhesive layer(s) to form a laminate of semiconductor chips in some cases. In modern days, in which various mobile devices equipped with a display element such as mobile phones and portable game devices are widespread, size reduction of display elements has been required. As a method for size reduction of display elements, narrow framing of image display sections has been conducted (hereinbelow, also referred to as "narrow frame design"). For example, also in display elements for outdoor installation, narrow frame design may be applied in order to enlarge the screen size. Lamination of small semiconductor chips and narrow frame design require techniques of adhesion using an adhesive of a thin line width formed with a dispenser.

As an adhesive used in adhesion of these small electronic component and narrow frame design, it is known to use a photo and moisture-curable resin composition including a radically polymerizable compound, a moisture-curable urethane resin, a photopolymerization initiator, and a filler (see e.g., Patent Literature 1).

As a urethane resin, a product obtained by reacting a polyol compound with a polyisocyanate compound is commonly used. In urethane resins, a polyol having an ether or ester skeleton is commonly used as the polyol compound. In applications requiring heat resistance, polyols having a polycarbonate skeleton is sometimes used (see e.g., Patent Literatures 2 to 4).

US 2014/303330 A1 relates to a radical-curable hot-melt urethane resin composition and an optical molded body that uses the radical-curable hot-melt urethane resin composition.

### Citation List

### Patent Literature

PLT 1: WO 2015/056717
PLT 2: JP 2006-104277A
PLT 3: JP 02-032185A
PLT 4: WO 2010/086924

### Summary of Invention

### Technical Problem

Display elements of various electronic devices or narrow frame design may be used for in-vehicle uses or outdoor uses. Thus, photo and moisture-curable resin composition to be used for adhesion of electronic components and narrow frame design may be required to have heat resistance, weather resistance, and moisture resistance. However, in general, photo and moisture-curable resin compositions often insufficiently achieve these performance capabilities.

Meanwhile, the urethane resins having a polycarbonate skeleton disclosed in Patent Literatures 2 to 4 have good heat resistance but are often inferior in durability of the adhesive force. For example, an electronic component may be exposed to a high temperature of the order of 80°C or a low temperature of 0°C or less depending on its use environment. When a temperature change occurs as described above, the thermal expansion coefficient of the electronic component may result in large distortion in the adhesive. When such distortion repetitively occurs, the adhesive partially breaks, and the adhesive force of the adhesive deteriorates. For this reason, it is difficult for an adhesive in which a polyurethane resin having a polycarbonate skeleton is used to have good durability of the adhesive force as well as to have improved heat resistance, weather resistance, and moisture resistance.

It is thus an object of the present invention to provide a curable resin composition allowing a cured product to have excellent heat resistance, weather resistance, and moisture resistance and providing good durability of an adhesive force.

### Solution to Problem

The present inventors have made intensive studies, found that the above problem can be solved by allowing the cured product to have a storage elastic modulus of a predetermined value or less, while lowering the decrease rate of the tensile storage elastic modulus of a cured product after heat treatment with respect to the tensile storage elastic modulus of the cured product before heat treatment, or by using a moisture-curable resin having a polycarbonate skeleton, and completed the present invention below.

The present invention is defined in the appended claims.

### Advantageous Effects of Invention

According to the present invention, there can be provided a curable resin composition allowing a cured product to have excellent heat resistance, weather resistance, and moisture resistance and providing good durability of an adhesive force.

### Brief Description of Drawing

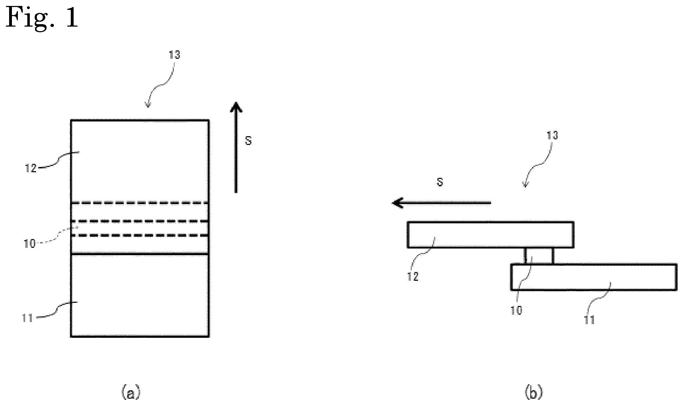

[Fig. 1(a)] Fig 1(a) is a schematic plan view illustrating an adhesiveness test method.
[Fig. 1(b)] Fig 1(b) is a schematic side view illustrating the adhesiveness test method.

### Description of Embodiment(s)

### <Curable Resin Composition>

A cured body of a curable resin composition according to the present invention comprises a curable resin composition containing a moisture-curable resin (A), and a cured product of the curable resin composition has a storage elastic modulus of 5 MPa or less at an elongation percentage of 25%. Further, the moisture-curable resin (A) contains a moisture-curable resin having a polycarbonate skeleton.

In the present invention, there is used a moisture-curable resin having a polycarbonate skeleton while having a storage elastic modulus at an elongation percentage of 25% decreases to provide good stress relaxing properties and flexibility, as described above. This suppresses deterioration in the stress relaxing properties and flexibility even after use under a high temperature environment or even after repetitive use at a low temperature and a high temperature, for example, to thereby make the heat resistance, weather resistance, and moisture resistance and further, the durability of an adhesive force good. Thereby, breakage is more unlikely to occur in the cured body, and the adhesiveness is satisfactorily maintained even after use in outdoors or vehicles for a long period.

When the moisture-curable resin (A) contains a moisture-curable resin having a polycarbonate skeleton, the decrease rate of the tensile storage elastic modulus of the cured product is preferably 15% or more.

Hereinbelow, each aspect of the present invention will be described more in detail.

The storage elastic modulus of the cured product described above at an elongation percentage of 25% is preferably 3 MPa or less, more preferably 1.5 MPa or less, even more preferably 1.0 MPa or less, particularly preferably 0.4 MPa or less, from the viewpoint of enhancing the stress relaxing properties, and flexibility, of the cured product and enhancing the durability of an adhesive force.

A lower storage elastic modulus of the cured product at an elongation percentage of 25% is better from the viewpoint of flexibility; however, from the viewpoint of imparting a certain mechanical strength to the cured product of the curable resin composition, the storage elastic modulus is preferably 0.03 MPa or more, more preferably 0.06 MPa or more, even more preferably 0.09 MPa or more.

The storage elastic modulus at an elongation percentage of 25% is a storage elastic modulus obtained by measurement in a state in which the cured product is subjected to an elongation of 25% at 23°C. The details of a method for measuring the storage elastic modulus are as in Examples described below.

Examples of methods for adjusting the storage elastic modulus of the cured product at an elongation percentage of 25% include adjusting the chemical structure and the amount blended of the moisture-curable resin or the radically polymerizable compound and the glass transition temperature of a cured body thereof. For example, when the cured body of the moisture-curable resin or the radically polymerizable compound has a low glass transition temperature, the storage elastic modulus of the cured product at an elongation percentage of 25% tends to be lower.

The decrease rate of the tensile storage elastic modulus described above is preferably 15% or less, more preferably 10% or less, even more preferably 5% or less, from the viewpoint of enhancing the weather resistance, heat resistance, and moisture resistance, of the cured product to thereby make the quality such as adhesiveness good even after use for a long period.

The tensile storage elastic modulus described above may increase after a heat treatment. When the tensile storage elastic modulus described above increases after a heat treatment, the increase does not affect the quality such as adhesiveness after use for a long period. Thus, the increase rate may be more than 0% in the present invention. That the increase rate is "more than 0%" means that the decrease rate is "less than 0%". Needless to say, the decrease rate may be 0% or more. From the viewpoint of enhancing the adhesive force of the curable resin composition, the increase rate of the tensile storage elastic modulus before and after the heat treatment is conducted is preferably 200% or less, more preferably 150% or less, even more preferably 100% or less. As the case where the tensile storage elastic modulus described above increases after the heat treatment, the case where the cured product includes uncured components is conceived.

To determine the change rate in the tensile storage elastic modulus, the tensile storage elastic modulus E1' of the cured product before heat treatment at 140°C for 24 hours and the tensile storage elastic modulus E2' of the cured product after heat treatment are measured by a dynamic viscoelasticity measuring apparatus. Then, the change rate can be calculated by the expression below. When the change rate in the tensile storage elastic modulus is negative, the absolute value is taken as the decrease rate of the tensile storage elastic modulus, and when the change rate in the tensile storage elastic modulus is positive, the absolute value is taken as the increase rate of the tensile storage elastic modulus. Each of the tensile storage elastic moduli E1' and E2' is the average value of tensile storage elastic moduli measured in the range of from 50 to 100°C. $\left(E2′-E1′\right) / E 1 ′ \times 100$

The decrease rate of the tensile storage elastic modulus can be adjusted within the above range by appropriately selecting the chemical structure, and the amount blended, of the moisture-curable resin described below, for example.

The tensile storage elastic modulus E1' of the cured product before heat treatment at 140°C for 24 hours is preferably 0.3 MPa or more, more preferably 0.8 MPa or more, even more preferably 1.2 MPa or more, and preferably 5.0 MPa or less, more preferably 4.0 MPa or less, even more preferably 3.0 MPa or less. When the tensile storage elastic modulus E1' is equal to or more than the lower limit described above, a sufficient adhesive force is more likely to be obtained. When the tensile storage elastic modulus E1' is equal to or less than the upper limit described above, sufficient stress relaxing properties is more likely to be obtained.

The curable resin composition according to one preferred embodiment of the present invention has a difference in the yellowness (ΔYI) of 7.0 or less. Here, the difference in the yellowness (ΔYI) refers to a difference represented by |YI(1) - YI(0) |, where YI(1) is the yellowness of the cured product after heating at 120°C for 100 hours (yellow index), and YI(0) is the yellowness of the cured product before heating.

With the difference in the yellowness (ΔYI) set to 7.0 or less, while the storage elastic modulus at an elongation percentage of 25% is low and the stress relaxing properties and the flexibility are good, the weather resistance of the cured product is excellent, as described above. For this reason, the quality of the cured product of the curable resin composition is kept good even when the cured product is exposed to a high temperature environment, such as in a vehicle or outdoors in summer, for a long period. From the viewpoint of weather resistance, the difference in the yellowness (ΔYI) is more preferably 5.5 or less, more preferably 3.8 or less, even more preferably 2.0 or less. The difference in the yellowness (ΔYI) is preferably as low as possible and only required to be 0 or more.

As for the storage elastic modulus at an elongation percentage of 25%, the tensile storage elastic modulus, and the difference in the yellowness (ΔYI) described above, it is only required that a cured product sample of the curable resin composition of the present invention be prepared and the storage elastic modulus at an elongation percentage of 25%, the tensile storage elastic modulus, and the yellowness be measured and determined with respect to the cured product sample. The cured product sample is only required to be prepared by curing the curable resin composition under conditions where the curable resin composition can be sufficiently cured. Specifically, the curable resin composition is only required to be cured under the conditions below in accordance with the curing mechanism of the curable resin composition.

For example, in the case of a photo and moisture-curable resin composition, it is only required that the curable resin composition be irradiated with ultraviolet rays at 1000 mJ/cm² by an LED lamp to be photo-cured and thereafter, the composition be left to stand at 25°C and 50RH% for one day to be moisture-cured to thereby provide a cured product sample. In the case of a moisture-curable resin composition, it is only required to conduct the same operation except that the photo-curing step is omitted.

The curable resin composition of the present invention preferably has an adhesive force at 25°C of 3.0 MPa or more. The curable resin composition, when the adhesive force is equal to the above lower limit value or more, can achieve sufficient adhesion performance and thus can be suitably used as an adhesive. From the viewpoint of further enhancing the adhesion performance of the curable resin composition, the adhesive force at 25°C is more preferably 4.0 MPa or more, even more preferably 4.5 MPa or more.

The adhesive force of the curable resin composition at 25°C is measured by the adhesiveness test below.

As shown in Figs. 1(a) and 1(b), a curable resin composition 10 is coated onto a glass plate 11 so as to have a width of 0.4±0.05 mm, a length of 25±2 mm, and a thickness of 0.2±0.05 mm. Thereafter, a glass plate 12 is overlaid thereon, the curable resin composition is cured, and the glass plate 11 and the glass plate 12 are bonded to each other to thereby prepare a sample for adhesiveness test 13. The sample for adhesiveness test 13 prepared is stretched under a 25°C atmosphere in the shear direction S using a tensile testing machine at a speed of 12 mm/sec, and the strength on separation of the glass plate 11 and the glass plate 12 is measured to thereby determine the adhesive force at 25°C.

Here, the curing conditions for the above curable resin composition are only required to be conditions under which the curable resin composition can be sufficiently cured. Specifically, the curable resin composition is only required to be cured under the conditions below in accordance with the curing mechanism of the curable resin composition.

In the case of a moisture-curable resin composition, the composition is coated using a dispensing apparatus onto the glass plate 11 so as to have a width of 0.4±0.05 mm, a length of 25±2 mm, and a thickness of 0.2±0.05 mm. The glass plate 12 is bonded to the glass plate 11, and the bonded glass plates are left to stand at 25°C and 50 RH% for one day to moisture-cure the composition. Then, a sample for adhesiveness evaluation 13 is obtained.

In the case of a photo and moisture-curable resin composition, first, the composition is coated using a dispensing apparatus onto the glass plate 11 so as to have a width of 0.4±0.05 mm, a length of 25±2 mm, and a thickness of 0.2±0.05 mm. The composition is irradiated with ultraviolet rays at 3000 mJ/cm² by a mercury lamp to be photo-cured. Thereafter, the glass plate 12 is bonded to the glass plate 11, and a weight of 100 g is placed on the glass plates. The bonded glass plates are left to stand at 25°C and 50 RH% for one day to moisture-cure the composition. Then, a sample for adhesiveness evaluation 13 is obtained.

In this test, glass plates ultrasonically washed for 5 minutes are used as the glass plates.

### [Curable Resin]

The curable resin composition for forming the cured body of the present invention has at least moisture-curability. Having moisture-curability, the curable resin composition can be cured without heating. Thus, when the curable resin composition is cured, damage to adhesion portions or adherends such as electronic components peripheral to the adhesion portions due to heating can be prevented. When the composition is moisture-curable, the adhesiveness when the composition is cured can be easily enhanced.

The curable resin composition preferably has both the photo-curability and the moisture-curability, that is, photo and moisture-curability. The curable resin composition, when having photo and moisture-curability, is first photo-cured, for example, to impart a relatively low adhesive force. Thereafter, the photo-cured resin composition is further left to stand in air and cured by moisture to thereby enable a cured product having a sufficient adhesive force to be provided.

As described above, the curable resin composition has at least moisture-curability and preferably has photo and moisture-curability. Accordingly, the curable resin composition of the present invention has at least the moisture-curable resin (A) and preferably contain both the moisture-curable resin (A) and a photo-curable resin.

### (Moisture-curable resin (A))

In the curable resin composition, the moisture-curable resin (A) is only required to be appropriately selected such that the decrease rate of the tensile storage elastic modulus falls within the above range, and the curable resin composition is only required to include, as the moisture-curable resin (A), a moisture-curable resin having a polycarbonate skeleton.

Further, in the curable resin composition according to another aspect, the curable resin composition includes a moisture-curable resin having a polycarbonate skeleton as the moisture-curable resin (A), as described above.

In the present invention, the decrease rate of the tensile storage elastic modulus is lowered by allowing the moisture-curable resin to contain a polycarbonate skeleton to make the heat resistance, weather resistance, and moisture resistance, of the cured product more likely to be good. Additionally, the difference in the yellowness (ΔYI) described above is more likely to be adjusted within a predetermined range.

Specific examples of the moisture-curable resin (A) include isocyanate group-containing resins. An isocyanate group-containing resin is cured when the isocyanate group in the molecule reacts with water present in air, or an adherend.

The moisture-curable resin (A) is an aliphatic isocyanate group-containing resin. The isocyanate group-containing resin is a moisture-curable urethane resin (a1). The moisture-curable urethane resin (a1) is a resin having a urethane bond in addition to the isocyanate group. One moisture-curable resin (A) may be used singly, or two or more moisture-curable resins (A) may be used in combination.

The isocyanate group-containing resin is a compound having an aliphatic isocyanate group (hereinbelow, also simply referred to as the "compound (A1)") and a compound having an aromatic isocyanate group (hereinbelow, also simply referred to as the "compound (A2)").

When the moisture-curable resin (A) contains the compound (A1), the storage elastic modulus at an elongation percentage of 25% decreases to make the flexibility and stress relaxing properties excellent. Additionally, the difference in the yellowness (ΔYI) can be lowered to thereby make weather resistance good. Meanwhile, when the moisture-curable resin (A) contains the compound (A2), the curability becomes excellent, the curing rate becomes higher, and the adhesive force is enhanced.

The moisture-curable resin (A) contains both the compound (A1) and the compound (A2), from the viewpoint of enhancing the various performance capabilities described above in a well-balanced manner. The mass ratio of the compound (A2) with respect to the compound (A1) (A2/A1) is 0.1 or more and 3.0 or less.

When the mass ratio (A2/A1) is set to 0.1 or more, the curability becomes excellent, the curing rate becomes higher, and the adhesive force is enhanced. From these viewpoints, the mass ratio (A2/A1) is more preferably 0.5 or more, even more preferably 0.7 or more.

When the mass ratio (A2/A1) is set to 3.0 or less, the storage elastic modulus at an elongation percentage of 25% can be lowered to thereby make the flexibility and the stress relaxing properties more likely to be enhanced. Additionally, when the ratio is set to 3.0 or less, the difference in the yellowness (ΔYI) is also more likely to be smaller. From these viewpoints, the mass ratio (A2/A1) is more preferably 2.2 or less, even more preferably 1.6 or less, still more preferably 1.3 or less.

The aliphatic isocyanate group in the compound (A1) is an isocyanate group derived from an aliphatic isocyanate compound, and the details of the aliphatic isocyanate compound are as described below. The aromatic isocyanate group in the compound (A2) is an isocyanate group derived from an aromatic isocyanate compound, and the details of the aromatic isocyanate compound are as described below.

The moisture-curable resin (A) contain both the compounds (A1) and (A2) and the each of the compounds are a moisture-curable urethane resin (a1) having a polycarbonate skeleton.

In the present invention, a compound (A3) having both an aliphatic isocyanate group and an aromatic isocyanate group in one molecule may be used as the moisture-curable resin (A).

### (Moisture-curable urethane resin (a1))

Hereinbelow, a case where the moisture-curable resin (A) is a moisture-curable urethane resin (a1) will be described more in detail. The moisture-curable urethane resin (a1), as described above, has a urethane bond and an isocyanate group. The moisture-curable urethane resin (a1) may have only one isocyanate group or may have two or more isocyanate groups in one molecule, but preferably has an isocyanate group at each end of the main chain of the molecule.

The moisture-curable urethane resin (a1) can be obtained by reacting a polyol compound having 2 or more hydroxyl groups in one molecule with a polyisocyanate compound having 2 or more isocyanate groups in one molecule.

The reaction between the polyol compound and the polyisocyanate compound described above is usually conducted at a molar ratio of the isocyanate group (NCO) in the polyisocyanate compound to the hydroxyl group (OH) in the polyol compound in the range of [NCO]/[OH] = 2.0 to 2.5.

In the present invention, it is only required that a polycarbonate polyol be used as the polyol compound, which is a raw material of the moisture-curable urethane resin (a1), to introduce a polycarbonate skeleton into the moisture-curable urethane resin (a1) to thereby provide the moisture-curable urethane resin (a1) having a polycarbonate skeleton.

As the polycarbonate polyol, a polycarbonate diol is preferred. Specific examples of the polycarbonate diols include compounds represented by the following formula (1).

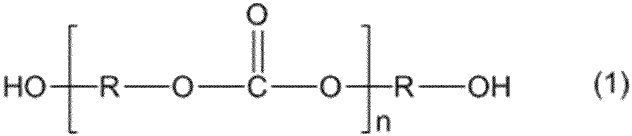

In the formula (1), R is a divalent hydrocarbon group having 4 to 16 carbon atoms, and n is an integer of 2 to 500.

In the formula (1), R is preferably an aliphatic saturated hydrocarbon group. When R is an aliphatic saturated hydrocarbon group, the heat resistance is more likely to be good. Yellowing due to thermal deterioration is more unlikely to occur, and the weather resistance also becomes good. R consisting of an aliphatic saturated hydrocarbon group may have a chain structure or a cyclic structure. From the viewpoint that the storage elastic modulus at an elongation percentage of 25% is more likely to decrease and the stress relaxing properties and the flexibility are more likely to be good, R preferably has a chain structure. R having a chain structure may be either linear or branched.

n is preferably 5 to 200, more preferably 10 to 150, even more preferably 20 to 50.

One R contained in the polycarbonate polyol constituting the moisture-curable urethane resin (a1) may be used singly, two or more R's may be used in combination. When 2 or more R's are used in combination, at least some of R's are preferably chain aliphatic saturated hydrocarbon groups having 6 or more carbon atoms. Alternatively, 2 more R's are preferably contained in one molecule, and 2 or 3 R's are more preferably contained in one molecule.

The chain aliphatic saturated hydrocarbon group having 6 or more carbon atoms has preferably 6 or more and 12 or less carbon atoms, more preferably 6 or more and 10 or less carbon atoms, even more preferably 6 or more and 8 or less carbon.

As specific examples of R, R may be linear such as a tetramethylene group, a pentylene group, a hexamethylene group, a heptamethylene group, an octamethylene group, a nonamethylene group, and a decamethylene group or may be branched such as methylpentylene groups including 3-methylpentylene group, and a methyloctamethylene group. A plurality of R's in one molecule may be the same or different from each other. Further, from the viewpoint of setting the elastic modulus to a certain value or more, R preferably includes a branched aliphatic saturated hydrocarbon group, and from the viewpoint of weather resistance, R preferably includes a linear aliphatic saturated hydrocarbon group. As R in a polycarbonate polyol, branched R and linear R may be used in combination.

One polycarbonate polyol may be used singly, or two or more polycarbonate polyols may be used in combination.

In a reference aspect, it is only required that a polyester polyol be used as the polyol compound, which is a raw material of the moisture-curable urethane resin (a1), to introduce a polyester skeleton into the moisture-curable urethane resin (a1) to thereby provide the moisture-curable urethane resin (a1) having a polyester skeleton.

Examples of the above polyester polyol include polyester polyols obtained by a reaction between a polycarboxylic acid and a polyol and poly-ε-caprolactone polyol obtained by subjecting ε-caprolactone to ring-opening polymerization.

Examples of the above polycarboxylic acid which is a raw material of the polyester polyol include divalent aromatic carboxylic acids such as terephthalic acid, isophthalic acid, 1,5-naphthalic acid, and 2,6-naphthalic acid, divalent aliphatic carboxylic acids such as succinic acid, glutaric acid, adipic acid, pimelic acid, suberic acid, azelaic acid, sebacic acid, decamethylene dicarboxylic acid, and dodecamethylene dicarboxylic acid, tri- or higher valent aromatic carboxylic acids such as trimellitic acid, trimesic acid, pyromellitic acid, and naphthalenetricarboxylic acid, and tri- or higher valent aliphatic carboxylic acids such as cyclohexanetricarboxylic acid and hexanetricarboxylic acid.

Examples of the polyol which is a raw material of the polyester polyol include ethylene glycol, propylene glycol, 1,3-propanediol, 1,4-butanediol, neopentyl glycol, 1,5-pentanediol, 1,6-hexanediol, diethylene glycol, and cyclohexanediol.

Among these, from the viewpoint of lowering the decrease rate of the tensile storage elastic modulus, as the polycarboxylic acid, aromatic carboxylic acids are preferably used. Among these, a tri- or higher valent aromatic carboxylic acid is more preferably used, and a trivalent aromatic carboxylic acid is even more preferably used.

Examples of the polyisocyanate compound to be a raw material of the moisture-curable urethane resin (a1) include aliphatic polyisocyanate compounds and aromatic polyisocyanate compounds.

Examples of the aliphatic polyisocyanate compound include hexamethylene diisocyanate, trimethylhexamethylene diisocyanate, lysine diisocyanate, norbornane diisocyanate, trans cyclohexane-1,4-diisocyanate, isophorone diisocyanate, hydrogenated xylylene diisocyanate, hydrogenated diphenylmethane diisocyanate, cyclohexane diisocyanate, bis(isocyanatemethyl)cyclohexane, and dicyclohexylmethane diisocyanate. The aliphatic polyisocyanate compound may be one obtained by multimerizing these.

Examples of the aromatic polyisocyanate compound include diphenylmethane diisocyanate, liquid modified products of diphenylmethane diisocyanate, tolylene diisocyanate, and naphthalene-1,5-diisocyanate. The aromatic polyisocyanate compound may be one obtained by multimerizing these or may be a polymeric MDI.

One polyisocyanate compound may be used singly, or two or more polyisocyanate compounds may be used in combination.

In the present invention, the compound (A1) described above can be obtained by using the aliphatic polyisocyanate compound in synthesis of the moisture-curable urethane resin (a1). In synthesis of the moisture-curable urethane resin (a1), the compound (A2) described above can be obtained by using the aromatic polyisocyanate compound. In synthesis of the moisture-curable urethane resin (a1), the compound (A3) described above can be obtained by using both the aromatic polyisocyanate compound and the aliphatic polyisocyanate compound.

As the moisture-curable urethane resin (a1), the compound (A1) or the compound (A2) may be used singly as described above, but both the compound (A1) and the compound (A2) are preferably used. The mass ratio (A1/A2) is as described above. As the compound (A1) or the compound (A2) to be used in the moisture-curable urethane resin (a1), it is only required to use one having at least a polycarbonate skeleton or a polyester skeleton, but one having a polycarbonate skeleton is more preferably used.

The weight-average molecular weight of the moisture-curable resin (A) is not particularly limited. The preferred lower limit is 800, and the preferred upper limit is 20000. When the weight-average molecular weight is 800 or more, the crosslinking density does not excessively increase, and the flexibility and the stress relaxing properties are likely to be good. When the weight-average molecular weight is 20000 or less, applicability of the curable resin composition becomes excellent.

The more preferred lower limit of the weight-average molecular weight of the moisture-curable resin (A) described above is 1500. The more preferred upper limit is 12000, the even more preferred lower limit is 2000, and the even more preferred upper limit is 8000. In the present description, the weight-average molecular weight is a value determined by performing measurement by gel permeation chromatography (GPC) in terms of polystyrene. Examples of columns to be used on measuring the weight-average molecular weight by GPC in terms of polystyrene include a Shodex LF-804 (manufactured by Showa Denko K. K.). Examples of solvents to be used for GPC include tetrahydrofuran.

The content of the moisture-curable resin (A) is preferably 30 mass% or more, more preferably 37 mass% or more, even more preferably 43 mass% or more, based on the total amount of the curable resin composition. When the content is set to the lower limit value or more, the moisture-curability of the curable resin composition can be good. Additionally, heat resistance and weather resistance are more likely to be imparted to a cured product of the curable resin composition. Further, the difference in the yellowness (ΔYI) and the decrease rate of the tensile elastic modulus described above are more likely to be lowered.

The content of the moisture-curable resin (A) is preferably 85 mass% or less, more preferably 75 mass% or less, even more preferably 65 mass% or less, based on the total amount of the curable resin composition. When the content of the moisture-curable resin (A) is set to the upper limit value or less, other resin components can be contained in a considerable amount. Accordingly, flexibility and stress relaxing properties are more likely to be imparted to the curable resin composition, and the storage elastic modulus at an elongation percentage of 25% is more likely to be lowered.

In one aspect of the present invention, as described above, the moisture-curable resin (A) is a moisture-curable resin having a polycarbonate skeleton.

In another aspect of the present invention, the curable resin composition includes a moisture-curable resin including a polycarbonate skeleton as the moisture-curable resin (A) as described above, but may include a moisture-curable resin other than the moisture-curable resin including a polycarbonate skeleton. Specifically, the composition may include a moisture-curable resin having a polyester skeleton or a moisture-curable urethane resin having neither a polycarbonate skeleton nor a polyester skeleton. However, also in another aspect, the moisture-curable resin (A) is a moisture-curable resin including a polycarbonate skeleton.

The moisture-curable urethane resin having neither a polycarbonate skeleton nor a polyester skeleton can be obtained by reacting a polyol compound having two or more hydroxyl groups in one molecule with a polyisocyanate compound having two or more isocyanate groups in one molecule. In this case, as the polyol compound, it is only required to use a polyol compound having neither a polycarbonate skeleton nor a polyester skeleton, and specifically, it is only required to use a polyether polyol, or a polyalkylene polyol. As the isocyanate compound, it is only required to use an aliphatic isocyanate compound, an aromatic isocyanate compound, or both of the compounds. The details thereof are as described above.

In each aspect, the content of the moisture-curable resin having neither a polycarbonate skeleton nor a polyester skeleton is, for example, 20 mass% or less, preferably 10 mass% or less, more preferably 5 mass% or less, most preferably 0 mass%, based on the total amount of the moisture-curable resin (A).

In each aspect, the content of the moisture-curable resin containing a polycarbonate skeleton is, for example, 50 mass% or more and 100 mass% or less, preferably 70 mass% or more and 100 mass% or less, more preferably 90 mass% or less and 100 mass% or less, most preferably 100 mass%, based on the total amount of the moisture-curable resin (A).

### (Photo-curable resin)

Examples of the photo-curable resin of the present invention include radically polymerizable compounds. When the curable resin composition of the present invention contains a radically polymerizable compound, photo-curability is imparted to the composition.

The radically polymerizable compound is only required to be a radically polymerizable compound having photo-polymerizability and is not particularly limited as long as the compound is a compound having a radically polymerizable functional group in the molecule. Among these, compounds having an unsaturated double bond as the radically polymerizable functional group are preferred. Particularly, in respect of reactivity, a compound having a (meth)acryloyl group (hereinbelow, also referred to as a "(meth)acrylic compound") is preferred.

Specific examples of the (meth)acrylic compound include (meth)acrylic ester compounds, epoxy (meth)acrylates, and urethane (meth)acrylates. Urethane (meth)acrylates are ones having no residual isocyanate group.

In the present description, a "(meth)acryloyl group" means an acryloyl group or a (meth)acryloyl group, and "(meth)acrylate" means acrylate or methacrylate. The same applies to other similar terms.

The (meth)acrylic ester compound described above may be monofunctional, bifunctional, or trifunctional.

Examples of monofunctional ones among (meth)acrylic ester compounds include alkyl (meth)acrylates such as methyl (meth)acrylate, ethyl (meth)acrylate, propyl (meth)acrylate, n-butyl (meth)acrylate, isobutyl (meth)acrylate, t-butyl (meth)acrylate, n-octyl (meth)acrylate, isooctyl (meth)acrylate, 2-ethylhexyl (meth)acrylate, isononyl (meth)acrylate, isodecyl (meth)acrylate, lauryl (meth)acrylate, isomyristyl (meth)acrylate, and stearyl (meth)acrylate, (meth)acrylates having an alicyclic structure, such as cyclohexyl (meth)acrylate, 4-tert-butylcyclohexyl (meth)acrylate, 3,3,5-trimethylcyclohexyl (meth)acrylate, isobornyl (meth)acrylate, and dicyclopentenyl (meth)acrylate, hydroxyalkyl (meth)acrylates such as 2-hydroxyethyl (meth)acrylate, 2-hydroxypropyl (meth)acrylate, 2-hydroxybutyl (meth)acrylate, and 4-hydroxybutyl (meth)acrylate, alkoxyalkyl (meth)acrylates such as 2-methoxyethyl (meth)acrylate, 2-ethoxyethyl (meth)acrylate, and 2-butoxyethyl (meth)acrylate, alkoxy ethylene glycol (meth)acrylates such as methoxy ethylene glycol (meth)acrylate and ethoxy ethylene glycol (meth)acrylate, and polyoxyethylene-based (meth)acrylates such as methoxy diethylene glycol (meth)acrylate, methoxy triethylene glycol (meth)acrylate, methoxy polyethylene glycol (meth)acrylate, ethyl carbitol (meth)acrylate, ethoxy diethylene glycol (meth)acrylate, ethoxy triethylene glycol (meth)acrylate, and ethoxy polyethylene glycol (meth)acrylate.

The (meth)acrylic ester compound also may be one having an aromatic ring, and examples thereof include benzyl (meth)acrylate, phenylalkyl (meth)acrylates such as 2-phenylethyl (meth)acrylate, and phenoxyalkyl (meth)acrylates such as phenoxyethyl (meth)acrylate. Further, the (meth)acrylic ester compound also may be a (meth)acrylate having a plurality of benzene rings such as a fluorene skeleton or a biphenyl skeleton. Specific examples thereof include fluorene-type (meth)acrylates and ethoxylated o-phenylphenol acrylate.

Additionally, examples thereof include phenoxy polyoxyethylene-based (meth)acrylates such as phenoxy diethylene glycol (meth)acrylate, phenoxy polyethylene glycol (meth)acrylate, nonylphenoxy diethylene glycol (meth)acrylate, and nonylphenoxy polyethylene glycol (meth)acrylate.

Further, examples of the monofunctional (meth)acrylic ester compounds include (meth)acrylates having a heterocyclic structure such as tetrahydrofurfuryl (meth)acrylate, alkoxylated tetrahydrofurfuryl (meth)acrylate, cyclic trimethylolpropaneformal (meth)acrylate, and 3-ethyl-3-oxetanylmethyl (meth)acrylate, various imide (meth)acrylates, 2,2,2-trifluoroethyl (meth)acrylate, 2,2,3,3-tetrafluoropropyl (meth)acrylate, 1H,1H,5H-octafluoropentyl (meth)acrylate, dimethylaminoethyl (meth)acrylate, diethylaminoethyl(meth)acrylate, 2-(meth)acryloyloxyethyl succinate, 2-(meth)acryloyloxyethyl hexahydrophthalate, N-acryloyloxyethyl hexahydrophthalimide, 2-(meth)acryloyloxyethyl-2-hydroxypropyl phthalate, glycidyl (meth)acrylate, and 2-(meth)acryloyloxyethyl phosphate.

Examples of bifunctional ones among the (meth)acrylic ester compounds include 1,3-butanediol di(meth)acrylate, 1,4-butanediol di(meth)acrylate, 1,6-hexanediol di(meth)acrylate, 1,9-nonanediol di(meth)acrylate, 1,10-decanediol di(meth)acrylate, 2-n-butyl-2-ethyl-1,3-propanediol di(meth)acrylate, ethylene glycol di(meth)acrylate, diethylene glycol di(meth)acrylate, tetraethylene glycol di(meth)acrylate, polyethylene glycol di(meth)acrylate, dipropylene glycol di(meth)acrylate, tripropylene glycol di(meth)acrylate, polypropylene glycol di(meth)acrylate, ethylene oxide-added bisphenol A di(meth)acrylate, propylene oxide-added bisphenol A di(meth)acrylate, ethylene oxide-added bisphenol F di(meth)acrylate, dimethylol dicyclopentadienyl di(meth)acrylate, neopentyl glycol di(meth)acrylate, ethylene oxide-modified isocyanurate di(meth)acrylate, 2-hydroxy-3-(meth)acryloyloxypropyl (meth)acrylate, carbonate diol di(meth)acrylate, polyether diol di(meth)acrylate, polyester diol di(meth)acrylate, polycaprolactone diol di(meth)acrylate, and polybutadiene diol di(meth)acrylate.

Additionally, examples of trifunctional or higher functional ones among (meth)acrylic ester compounds include trimethylolpropane tri(meth)acrylate, ethylene oxide-added trimethylolpropane tri(meth)acrylate, propylene oxide-added trimethylolpropane tri(meth)acrylate, caprolactone-modified trimethylolpropane tri(meth)acrylate, pentaerythritol tri(meth)acrylate, ethylene oxide-added isocyanurate tri(meth)acrylate, glycerin tri(meth)acrylate, propylene oxide-added glycerin tri(meth)acrylate, tris(meth)acryloyloxyethyl phosphate, ditrimethylolpropane tetra(meth)acrylate, pentaerythritol tetra(meth)acrylate, dipentaerythritol penta(meth)acrylate, and dipentaerythritol hexa(meth)acrylate.

As the above (meth)acrylic ester compound, monofunctional (meth)acrylic ester compounds are preferred. Among these, at least one selected from the group consisting of (meth)acrylic ester compounds having an alicyclic structure or an aromatic ring and alkyl (meth)acrylates is preferably included.

Examples of the above epoxy (meth)acrylate include ones obtained by reacting an epoxy compound with a (meth)acrylic acid. Here, the reaction between an epoxy compound with a (meth)acrylic acid is only required to be performed in the presence of a basic catalyst in accordance with a routine method. The epoxy (meth)acrylate may be monofunctional or polyfunctional such as bifunctional, but polyfunctional is preferred, and bifunctional is more preferred.

Examples of an epoxy compound as a raw material for synthesizing the above epoxy (meth)acrylate include bisphenol A-type epoxy resins, bisphenol F-type epoxy resins, bisphenol S-type epoxy resins, 2,2'-diallyl bisphenol A-type epoxy resins, hydrogenated bisphenol-type epoxy resins, propylene oxide-added bisphenol A-type epoxy resins, resorcinol-type epoxy resins, biphenyl-type epoxy resins, sulfide-type epoxy resins, diphenyl ether-type epoxy resins, dicyclopentadiene-type epoxy resins, naphthalene-type epoxy resins, phenol novolak-type epoxy resins, o-cresol novolak-type epoxy resins, dicyclopentadiene novolak-type epoxy resins, biphenyl novolak-type epoxy resins, naphthalene phenol novolak-type epoxy resins, glycidylamine-type epoxy resins, alkyl polyol-type epoxy resins, rubber modified-type epoxy resins, glycidyl ester compounds, and bisphenol A-type episulfide resins.

Examples of commercially available ones among the above epoxy (meth)acrylates include EBECRYL 860, EBECRYL 3200, EBECRYL 3201, EBECRYL 3412, EBECRYL 3600, EBECRYL 3700, EBECRYL 3701, EBECRYL 3702, EBECRYL 3703, EBECRYL 3800, EBECRYL 6040, EBECRYL RDX63182 (all manufactured by DAICEL-ALLNEX LTD.), EA-1010, EA-1020, EA-5323, EA-5520, EACHD, EMA-1020 (all manufactured by Shin Nakamura Chemical Co., Ltd.), Epoxy Ester M-600A, Epoxy Ester 40EM, Epoxy Ester 70PA, Epoxy Ester 200PA, Epoxy Ester 80MFA, Epoxy Ester 3002M, Epoxy Ester 3002A, Epoxy Ester 1600A, Epoxy Ester 3000M, Epoxy Ester 3000A, Epoxy Ester 200EA, Epoxy Ester 400EA (all manufactured by KYOEISHA CHEMICAL Co., LTD.), and DENACOL ACRYLATE DA-141, DENACOL ACRYLATE DA-314, DENACOL ACRYLATE DA-911 (all manufactured by Nagase ChemteX Corporation).

As the urethane (meth)acrylate, for example, ones obtained by reacting an isocyanate compound with a (meth)acrylic acid derivative having a hydroxyl group can be used. Here, for the reaction between an isocyanate compound and a (meth)acrylic acid derivative, it is only required to use a catalyst amount of a tin-based compound as a catalyst. The urethane (meth)acrylate may be monofunctional or polyfunctional such as bifunctional, but bifunctional is preferred.

Examples of the isocyanate compounds to be used for obtaining the urethane (meth)acrylate include polyisocyanate compounds such as isophorone diisocyanate, 2,4-tolylene diisocyanate, 2,6-tolylene diisocyanate, hexamethylene diisocyanate, trimethylhexamethylene diisocyanate, diphenylmethane-4,4'-diisocyanate (MDI), hydrogenated MDI, polymeric MDI, 1,5-naphthalene diisocyanate, norbornane diisocyanate, tolidine diisocyanate, xylylene diisocyanate (XDI), hydrogenated XDI, lysine diisocyanate, triphenylmethane triisocyanate, tris(isocyanate phenyl) thiophosphate, tetramethylxylylene diisocyanate, and 1,6,11-undecane triisocyanate.

As the isocyanate compound, chain-extended polyisocyanate compounds obtained by a reaction between a polyol and an excess of the isocyanate compound also can be used. Here, examples of the polyols include ethylene glycol, propylene glycol, glycerin, sorbitol, trimethylolpropane, carbonate diol, polyether diol, polyester diol, and polycaprolactone diol.

Examples of the above (meth)acrylic acid derivatives having a hydroxyl group include mono(meth)acrylates of a dihydric alcohol such as ethylene glycol, propylene glycol, 1,3-propanediol, 1,3-butanediol, 1,4-butanediol, or polyethylene glycol, mono(meth)acrylates or di(meth)acrylates of a trihydric alcohol such as trimethylolethane, trimethylolpropane, or glycerin, and epoxy (meth)acrylates such as bisphenol A-type epoxy (meth)acrylate.

Examples of commercially available ones among the above urethane (meth)acrylates include M-1100, M-1200, M-1210, M-1600 (all manufactured by Toagosei Co., Ltd.), EBECRYL 230, EBECRYL 270, EBECRYL 8402, EBECRYL 8411, EBECRYL 8412, EBECRYL 8413, EBECRYL 8804, EBECRYL 8803, EBECRYL 8807, EBECRYL 9270, EBECRYL 210, EBECRYL 4827, EBECRYL 6700, EBECRYL 220, EBECRYL 2220 (all manufactured by DAICEL-ALLNEX LTD.), ART RESIN UN-9000H, ART RESIN UN-9000A, ART RESIN UN-7100, ART RESIN UN-1255, ART RESIN UN-330, ART RESIN UN-3320HB, ART RESIN UN-1200TPK, ART RESIN SH-500B (all manufactured by Negami Chemical Industrial Co., Ltd.), U-2HA, U-2PHA, U-3HA, U-4HA, U-6H, U-6LPA, U-6HA, U-10H, U-15HA, U-122A, U-122P, U-108, U-108A, U-324A, U-340A, U-340P, U-1084A, U-2061BA, UA-340P, UA-4100, UA-4000, UA-4200, UA-4400, UA-5201P, UA-7100, UA-7200, UA-W2A (all manufactured by Shin Nakamura Chemical Co., Ltd.), AI-600, AH-600, AT-600, UA-101I, UA-101T, UA-306H, UA-306I, UA-306T (all manufactured by KYOEISHA CHEMICAL Co., LTD.), and CN-902, CN-973, CN-9021, CN-9782, CN-9833 (all manufactured by Arkema S.A.).

As the radically polymerizable compound, other radically polymerizable compounds than those mentioned above can be appropriately used. Examples of the other radically polymerizable compounds include (meth)acrylamide compounds such as N,N-dimethyl(meth)acrylamide, N-(meth)acryloyl morpholine, N-hydroxyethyl(meth)acrylamide, N,N-diethyl (meth)acrylamide, N-isopropyl (meth)acrylamide, and N,N-dimethylaminopropyl (meth)acrylamide and vinyl compounds such as styrene, α-methylstyrene, N-vinyl-2-pyrrolidone, and N-vinyl-ε-caprolactam.

In the present invention, from the viewpoint of moderately lowering the storage elastic modulus at an elongation percentage of 25% and making the flexibility and the stress relaxing properties good, the content of the polyfunctional radically polymerizable compound is preferably 20 parts by mass or less, more preferably 10 parts by mass or less, based on 100 parts by mass of the radically polymerizable compound. Without particular limitation, from the viewpoint of heat resistance, the above content of the polyfunctional radically polymerizable compound is only required to exceed 0 parts by mass and is preferably 2 parts by mass or more, more preferably 4 parts by mass or more.

Additionally, in the present invention, from the viewpoint of making the applicability of the curable resin composition good, a (meth)acrylic ester compound is preferably used as the radically polymerizable compound. Further, from the viewpoint of making the applicability of the curable resin composition good and enhancing the flexibility and the stress relaxing properties, a (meth)acrylic ester compound and a urethane (meth)acrylate are more preferably used in combination as the radically polymerizable compound.

The (meth)acrylic ester compound is preferably monofunctional. Meanwhile, the urethane (meth)acrylate, as mentioned above, may be monofunctional or polyfunctional such as bifunctional, but is more preferably polyfunctional, even more preferably bifunctional.

The radically polymerizable compound is preferably appropriately selected such that the glass transition temperature (Tg) of the cured body (polymerized body) thereof is relatively lowered and the storage elastic modulus at an elongation percentage of 25% of the cured product is lowered.

The content of the radically polymerizable compound is preferably 10 mass% or more, more preferably 20 mass% or more, even more preferably 28 mass% or more, based on the total amount of the curable resin composition. When the content is set to the lower limit value or more, it is more likely to appropriately impart photo-curability to the curable resin composition. Additionally, flexibility and stress relaxing properties are more likely to be imparted to the curable resin composition, and the storage elastic modulus at an elongation percentage of 25% is more likely to be lowered. Further, it is more likely to make the applicability of the curable resin composition good.

The content of the radically polymerizable compound is preferably 65 mass% or less, more preferably 60 mass% or less, even more preferably 53 mass% or less, based on the total amount of the curable resin composition. When the content of the radically polymerizable compound is set to the upper limit value or less, the curable resin composition can contain an appropriate amount of the moisture-curable resin (A). Accordingly, heat resistance and weather resistance are more likely to be imparted to a cured product. Additionally, the difference in the yellowness (ΔYI) and the decrease rate of the tensile storage elastic modulus are more likely to be smaller.

The mass ratio of the radically polymerizable compound to the moisture-curable resin (A) is preferably 0.2 or more and 2.0 or less, more preferably 0.3 or more and 1.5 or less, even more preferably 0.45 or more and 1.3 or less. When the mass ratio is set to within these ranges, various performance capabilities are more likely to be enhanced in a well-balanced manner. Additionally, the difference in the yellowness (ΔYI), the decrease rate of the tensile elastic modulus, the storage elastic modulus at an elongation percentage of 25%, described above are more likely to be adjusted within a desired range.

### (Photopolymerization initiator)

The curable resin composition of the present invention, when containing a radically polymerizable compound, preferably further contains a photopolymerization initiator. Containing a photopolymerization initiator enables photo-curability to be appropriately imparted to the curable resin composition.

Examples of the photopolymerization initiator include benzophenone-based compounds, acetophenone-based compounds, acylphosphine oxide-based compounds, titanocene-based compounds, oxime ester-based compounds, benzoyl ether-based compounds, and thioxanthone.

Examples of commercially available ones among the above photopolymerization initiators include IRGACURE 184, IRGACURE 369, IRGACURE 379, IRGACURE 651, IRGACURE 784, IRGACURE 819, IRGACURE 907, IRGACURE 2959, IRGACURE OXE01, Lucirin TPO (all manufactured by BASF SE), benzoin methyl ether, benzoin ethyl ether, and benzoin isopropyl ether (all manufactured by Tokyo Chemical Industry Co., Ltd.).

The content of the photopolymerization initiator in the curable resin composition is preferably 0.01 part by mass or more and 10 parts by mass or less, more preferably 0.5 parts by mass or more and 5 parts by mass or less, based on 100 parts by mass of the radically polymerizable compound. When the content of the photopolymerization initiator is within these ranges, a curable resin composition to be obtained will be excellent in photo-curability and storage stability. Additionally, when the content is set to the above ranges, the photo-radically polymerizable compound will be appropriately cured, and the adhesive force is more likely to be good.

### (Moisture curing-accelerating catalyst)

The curable resin composition preferably contains a moisture curing-accelerating catalyst, which catalyzes moisture curing reaction of the moisture-curable resin. When the moisture curing-accelerating catalyst is used, the curable resin composition becomes more excellent in the moisture curability, and the adhesive force is more likely to be enhanced.

Specific examples of the moisture curing-accelerating catalyst include amine-based compounds and metal-based catalysts. Examples of the amine-based compounds include compounds having a morpholine skeleton such as di(methylmorpholino) diethyl ether, 4-morpholinopropyl morpholine, and 2,2'-dimorpholino diethyl ether, dimethylamino group-containing amine compounds having two dimethylamino groups such as bis(2-dimethylaminoethyl) ether and 1,2-bis(dimethylamino) ethane, triethylamine, 1,4-diazabicyclo[2.2.2]octane, and 2,6,7-trimethyl-1,4-diazabicyclo[2.2.2]octane.

Examples of the metal-based catalysts include tin compounds such as din-butyltin dilaurate, di-n-butyltin diacetate, and tin octylate, zinc compounds such as zinc octylate and zinc naphthenate, and other metal compounds such as zirconium tetraacetylacetonate, copper naphthenate, and cobalt naphthenate.

The moisture curing-accelerating catalyst is preferably an amine-based compound among those described above.

For example, when the moisture-curable resin (A) includes a compound having an aromatic isocyanate group (A2), a compound having a morpholine skeleton is preferably used, and 2,2'-dimorpholino diethyl ether is particularly preferably used, as the moisture curing-accelerating catalyst. When the compound (A2) is used, use of a compound having a morpholine skeleton as the moisture curing-accelerating catalyst can achieve moisture curing at an appropriate curing rate and makes the adhesive force more likely to be higher.

Alternatively, for example, when the moisture-curable resin (A) includes a compound having an aliphatic isocyanate group (A1), a dimethylamino group-containing amine compound is preferably used, and bis(2-dimethylaminoethyl) ether is particularly preferably used, as the moisture curing-accelerating catalyst. When the compound (A2) is used, use of a dimethylamino group-containing amine compound enhances the curing rate on moisture curing and makes the adhesive force after curing more likely to be good.

The content of the moisture curing-accelerating catalyst is preferably 0.01 parts by mass or more and 8 parts by mass or less, more preferably 0.1 parts by mass or more and 4 parts by mass or less, based on 100 parts by mass of the moisture-curable resin (A). When the content of the moisture curing-accelerating catalyst is within the above ranges, an effect of accelerating the moisture curing reaction becomes excellent without deterioration of the storage stability of the curable resin composition.

### (Coupling agent)

The curable resin composition may contain a coupling agent. Allowing the curable resin composition to contain a coupling agent makes the adhesive force more likely to be enhanced. Examples of the coupling agents include silane coupling agents, titanate-based coupling agents, and zirconate-based coupling agents. Among these, silane coupling agents are preferred because of being excellent in an effect of enhancing the adhesiveness.

Examples of the silane coupling agent include 3-glycidoxypropyltrimethoxysilane, 3-glycidoxypropylmethyldimethoxysilane, 3-glycidoxypropyltriethoxysilane, 2-(3,4-epoxycyclohexyl) ethyltrimethoxysilane, 3-glycidoxypropylmethyldiethoxysilane, 3-aminopropyltrimethoxysilane, 3-aminopropyltriethoxysilane, 3-(2-aminoethyl)aminopropyltrimethoxysilane, 3-(2-aminoethyl)aminopropyltriethoxysilane, 3-(2-aminoethyl)aminopropylmethyldimethoxysilane, 3-(meth)acryloyloxypropyltrimethoxysilane, 3-(meth)acryloyloxypropyltriethoxysilane, 3-(meth)acryloyloxypropylmethyldimethoxysilane, 3-(meth)acryloyloxypropylmethyldiethoxysilane, vinyltrimethoxysilane, vinyltriethoxysilane, 3-isocyanatepropyltrimethoxysilane, 3-isocyanatepropylmethyldimethoxysilane, 3-isocyanatepropyltriethoxysilane, 3-isocyanatepropylmethyldiethoxysilane, 3-mercaptopropyltrimethoxysilane, 3-mercaptopropylmethyldimethoxysilane, 3-mercaptopropyltriethoxysilane, 3-mercaptopropylmethyldiethoxysilane, methyltrimethoxysilane, dimethyldimethoxysilane, phenyltrimethoxysilane, methyltriethoxysilane, dimethyldiethoxysilane, phenyltriethoxysilane, n-propyltrimethoxysilane, n-propyltriethoxysilane, hexyltrimethoxysilane, hexyltriethoxysilane, octyltriethoxysilane, decyltrimethoxysilane, and 1,6-bis(trimethoxysilyl)hexane.

Examples of the above titanate-based coupling agents include titanium diisopropoxy bis(acetylacetonate), titanium tetraacetylacetonate, and titanium diisopropoxy bis(ethylacetoacetate).

Examples of the above zirconate-based coupling agents include zirconium tetra n-propoxide and zirconium tetra n-butoxide.

As the coupling agent, a silane coupling agent is preferred. Among the silane coupling agents, preferred are isocyanate group-containing silane coupling agents such as 3-isocyanatepropyltrimethoxysilane, 3-isocyanatepropylmethyldimethoxysilane, 3-isocyanatepropyltriethoxysilane, and 3-isocyanatepropylmethyldiethoxysilane.

One coupling agent may be used singly, or two or more coupling agents may be used in combination.

The content of the coupling agent is preferably 0.05 parts by mass or more and 5 parts by mass or less, more preferably 0.2 parts by mass or more and 3 parts by mass or less, even more preferably 0.5 parts by mass or more and 2 parts by mass or less, based on 100 parts by mass of the curable resin. When the content of the coupling agent is set to within these ranges, the adhesive force can be enhanced with no influence on the stress relaxing properties, and the flexibility.

### (Filler)

The curable resin composition of the present invention may contain a filler. When containing a filler, the curable resin composition of the present invention will have preferable thixotropy, and thus the shape after application can be sufficiently maintained. As the filler, particular ones are only required to be used.

As the filler, inorganic fillers are preferred, and examples thereof include silica, talc, titanium oxide, zinc oxide, and calcium carbonate. Among these, silica is preferred because a curable resin composition to be obtained will be excellent in ultraviolet transmission. The filler may be subjected to a hydrophobic surface treatment such as a silylation treatment, an alkylation treatment, and an epoxidation treatment.

One filler may be used singly, or two or more fillers may be used in combination.

The content of the filler is preferably 1 part by mass or more and 20 parts by mass or less, more preferably 2 parts by mass or more and 15 parts by mass or less, based on 100 parts by mass of the curable resin.

The curable resin composition of the present invention may contain other additives such as wax particles, an ionic liquid, a colorant, foamed particles, expanded particles, and a reactive diluent in addition to the component mentioned above.

The curable resin composition may be diluted with a solvent as required. When the curable resin composition is diluted with a solvent, the parts by mass of the curable resin composition are on solid basis, that is, mean the parts by mass excluding the solvent.

Examples of methods for producing the curable resin composition of the present invention include a method in which a mixing apparatus is used to mix a moisture-curable resin and other additives to be blended as required, such as a radically polymerizable compound, a photopolymerization initiator, a moisture curing-accelerating catalyst, a filler, and a coupling agent. Examples of the mixing apparatus include a homodisper, a homomixer, a universal mixer, a planetary mixer (planetary stirring apparatus), a kneader, and a triple roll mill.

### [Cured Body]

The curable resin composition of the present invention is cured and used as a cured body. The curable resin composition of the present invention is cured, for example, when disposed between adherends, to thereby enable the adherends to be bonded. In this case, it is only required that the composition be applied onto one of the adherends and then, the other adherend be overlaid on the one adherend via the curable resin composition applied. The cured body of the present invention has good flexibility and stress relaxing properties and is also excellent in heat resistance, and weather resistance.

Accordingly, the cured body composed of the curable resin composition of the present invention is used for in-vehicle uses or outdoor uses, for example. Even when exposed to a high temperature environment for a long period, the cured body maintains the good flexibility and stress relaxing properties. For this reason, the cured body can maintain good adhesiveness for a long period without breakage.

When the curable resin composition of the present invention is photo and moisture-curable, it is only required that the composition be photo-cured by photo irradiation into a B-stage state (semi-cured state) and then be cured by moisture into a totally cured state. Here, it is only required that a photo and moisture-curable curable resin composition, when disposed between adherends to bond the adherends to each other, be applied onto one of the adherends and then photo-cured by photo irradiation into, for example, a B-stage state, and the other adherend be overlaid on the photo-cured curable resin composition to cause the adherends to temporarily adhere to each other at a moderate adhesive force (initial adhesive force). Thereafter, the curable resin composition in the B-stage state is totally cured by curing the moisture-curable resin by moisture to bond the overlaid adherends to each other via the curable resin composition at a sufficient adhesive force.

Application of the curable resin composition to the adherend may be performed by a dispenser, for example, without particular limitation. Light to be applied on photo-curing is not particularly limited as long as it cures the radically polymerizable compound, but is preferably ultraviolet rays. The curable resin composition, when totally cured by moisture, is only required to be left to stand in the atmosphere for a predetermined time.

The curable resin composition of the present invention is preferably used in adhesives for electronic devices. Thus, the adherends are, without particular limitation, preferably various components constituting electronic devices. Examples of the various components constituting electronic devices include electronic components or substrates on which electronic components are mounted. More specific examples thereof include various electronic components to be mounted on display elements, substrates on which electronic components are mounted, and semiconductor chips. The material for the adherends may be any of metal, glass, or plastic. The form of the adherends is not particularly limited, and examples thereof include a film form, a sheet form, a plate form, a panel form, a tray form, a rod form (bar-like body), a box-like form, and a housing form.

For example, the curable resin composition of the present invention is used inside an electronic device to bond substrates to each other to obtain an assembly, for example. The assembly thus obtained has a first substrate, a second substrate, and a cured body of the present invention, and at least a portion of the first substrate is bonded to at least a portion of the second substrate via the cured body. To each of the first substrate and the second substrate, at least one electronic component is preferably mounted.

The curable resin composition of the present invention is preferably used for narrow frame applications. For example, in various display devices such as display devices for outdoor installation, display devices for mobile phones such as smartphones, and in-vehicle display devices, an adhesive is applied on a narrow rectangular frame-shaped (i.e., a narrow frame) base, and a display panel, or a touch panel is assembled via the adhesive. As the adhesive, it is only required to use the curable resin composition of the present invention.

Furthermore, the curable resin composition of the present invention is preferably used for semiconductor chip applications. The curable resin composition of the present invention is used, for example, for bonding semiconductor chips to each other in semiconductor chip applications.

### Examples

The present invention will be described in more detail with reference to Examples, but the present invention is not restricted by these Examples in any way.

In the present Examples, various physical properties were evaluated as follows.

### (Adhesive force)

Samples for adhesiveness test were prepared from curable resin compositions each obtained in Examples and Comparative Examples in accordance with the method described in the description, and the adhesive force at 25°C (X0) was measured.

### (Storage elastic modulus at elongation percentage of 25%)

Each curable resin composition was poured into a Teflon(R) mold having a width of 3 mm, a length of 30 mm, and a thickness of 1 mm and cured to obtain a cured product sample. The curing conditions for the curable resin composition are as described in the description.

The cured product sample obtained was stretched to an elongation percentage of 100% by a tensile tester (Autograph AG-X, manufactured by SHIMADZU CORPORATION). The elastic modulus at an elongation percentage of 25% was determined on the tensile curve obtained and taken as the storage elastic modulus at an elongation percentage of 25%. The measurement conditions included 25°C and a tensile rate of 5 mm/sec.

### (Decrease rate of tensile storage elastic modulus)

Each curable resin composition was poured into a Teflon(R) mold having a width of 3 mm, a length of 30 mm, and a thickness of 0.5 mm and cured to obtain a cured product sample. The curing conditions for the curable resin composition are as described in the description.

The tensile storage elastic moduli of the cured product sample obtained were measured by a dynamic viscoelasticity measuring apparatus (manufactured by IT Keisoku Seigyo Co., Ltd., trade name "DVA-200") in the range of 50 to 100°C, and the average value thereof E1' was determined. The average value is the arithmetic average of all the measurement values, which were obtained by measuring a storage elastic modulus every 1°C from 50°C while the temperature was raised. The measurement conditions included deformation mode: tensile, setup strain: 1%, measurement frequency: 1 Hz, and temperature elevation rate: 5°C/min.

Additionally, the cured product sample was subjected to a heat treatment by being left to stand for 24 hours in a thermostatic chamber of which the inside temperature was set to 140°C. The dynamic viscoelasticity of the cured product sample after the heat treatment was measured in the same manner as described above in the range of 50 to 100°C. The average value E2' of the storage elastic moduli was determined, and the change rate (%) of the storage elastic modulus was calculated by the following expression. When the change rate (%) is negative, the absolute value represents the decrease rate. When the change rate (%) is positive, the absolute value represents the increase rate and means that the decrease rate is less than 0%. $\left(E2′-E1′\right) / E 1 ′ \times 100$

### (Difference in adhesive force (heat resistance))

Samples for adhesiveness test were prepared from curable resin compositions each obtained in Examples and Comparative Examples in accordance with the method described in the description. Each of the samples for adhesiveness test was subjected to a heat treatment by being left to stand for 24 hours in a thermostatic chamber of which the inside temperature was set to 140°C. The adhesive force at 25°C of the heat-treated sample for adhesiveness test was measured by the method described in the description and taken as the adhesive force after heating at 140°C for 24 hours (X1). The difference in the adhesive force (X1 - X0 (ΔMPa)) was calculated from the adhesive force after heating at 140°C for 24 hours (X1) and the adhesive force measured as mentioned above (X0) (adhesive force before heating at 140°C for 24 hours), and the heat resistance was evaluated using the value.

### (Difference in yellowness (ΔYI) (weather resistance))

The curable resin compositions obtained in Examples and Comparative Examples were each interposed between PET resin films and cured under the curing conditions described in the description to prepare cured product samples having a thickness of 100 µm. Each cured product sample was peeled off from the PET resin films, and the yellowness (YI(0)) of the cured product sample was measured by a transmission method using a spectrophotometer (manufactured by Hitachi High-Tech Corporation, "U-4100") in compliance with JIS K7105.

Additionally, the cured product sample was left to stand for 100 hours in a thermostatic chamber of which the inside temperature was set to 120°C. Thereafter, the yellowness (YI(1)) was measured in the same manner as described above, the difference in the yellowness (ΔYI) was calculated by the following expression, and the weather resistance was evaluated by means of the value. $ΔYI = \left|YI\left(1\right)-YI\left(0\right)\right|$

### (Pressure cooker test (PCT) (moisture resistance))

Samples for adhesiveness test were prepared from curable resin compositions each obtained in Examples and Comparative Examples in accordance with the method described in the description, and the specimens were placed in an autoclave tester ("SP510F", Yamato Scientific Co., Ltd.) and left to stand at 120°C for one hour. The adhesive force at 25°C of the treated specimen samples was measured by the method described in the description. The moisture resistance was evaluated by dividing the adhesive force value after the pressure cooker test by the adhesive force value before the pressure cooker test.

### (Adhesive force change after cooling/heating cycle (durability))

Samples for adhesiveness test were prepared from curable resin compositions each obtained in Examples and Comparative Examples in accordance with the method described in the description. Each of the samples for adhesiveness test was subjected to 1000 cycles of a cooling/heating cycle test in which an operation of leaving the sample to stand under a -40°C environment for 30 minutes and an operation of leaving the sample to stand under an 80°C environment for 30 minutes were alternatively repeated. The adhesive force at 25°C of the samples for adhesiveness test after the cooling/heating test was measured by the method described in the description and taken as the adhesive force after the cooling/heating cycle reliability. The value was used to evaluate the stress relaxing performance. The adhesive force after the cooling/heating cycle test was used for evaluation in accordance with the following evaluation criteria.

### [Evaluation Criteria]

A: No decrease in the adhesive force was observed.
B: The adhesive force decreased in some samples.
C: The adhesive force decreased in all of the samples, or cracking occurred in the test sample.

Moisture-curable urethane resins used in each of Examples and Comparative Examples were produced in accordance with Synthesis Examples below.

### [Synthesis Example 1]

100 parts by mass of a polycarbonate diol (compound represented by the formula (1), 90 mol% of R are a 3-methylpentylene group, and 10 mol% of R are a hexamethylene group, manufactured by KURARAY CO., LTD., trade name "Kuraraypolyol C-1090") as a polyol compound and 0.01 parts by mass of dibutyltin dilaurate were placed in a 500-mL separable flask. The content in the flask was mixed by stirring in vacuo (20 mmHg or less) at 100°C for 30 minutes. Thereafter, the pressure was set to normal pressure, and 50 parts by mass of diphenylmethane diisocyanate (manufactured by Nisso Shoji Co., Ltd., trade name "Pure MDI") as a polyisocyanate compound were added thereto and reacted by stirring at 80°C for 3 hours to thereby obtain a moisture-curable urethane resin having a polycarbonate (PC) skeleton and having an aromatic isocyanate group at each end (PC-skeleton aromatic-terminated urethane). The moisture-curable urethane resin obtained had a weight-average molecular weight of 6000.

### [Synthesis Example 2]

100 parts by mass of a polycarbonate diol (compound represented by the formula (1), manufactured by KURARAY CO., LTD., product name "Kuraraypolyol C-1090") as a polyol compound and 0.01 parts by mass of dibutyltin dilaurate were placed in a 500-mL separable flask. The content in the flask was mixed by stirring in vacuo (20 mmHg or less) at 100°C for 30 minutes. Thereafter, the pressure was set to normal pressure, and 115 parts by mass of "Duranate A201H" (trade name) manufactured by Asahi Kasei Corporation as an aliphatic polyisocyanate compound were added and reacted by stirring at 80°C for 3 hours to thereby obtain a moisture-curable urethane resin having a polycarbonate (PC) skeleton and having an aliphatic isocyanate group at each end (PC-skeleton aliphatic-terminated urethane (1)). The moisture-curable urethane resin obtained had a weight-average molecular weight of 7000.

### [Synthesis Example 3]

100 parts by mass of a polyhexamethylenecarbonate diol (represented by the formula (1), R is a hexamethylene group, and n is 50) as a polyol compound and 0.01 parts by mass of dibutyltin dilaurate were placed in a 500-mL separable flask and mixed in vacuo (20 mmHg or less) by stirring at 100°C for 30 minutes. Thereafter, the pressure was set to normal pressure, and 115 parts by mass of "Duranate A201H" (trade name) manufactured by Asahi Kasei Corporation as an aliphatic polyisocyanate compound were added and reacted by stirring at 80°C for 3 hours to thereby obtain a moisture-curable urethane resin having a polycarbonate (PC) skeleton and having an aliphatic isocyanate group at each end (PC-skeleton aliphatic-terminated urethane (2)). The moisture-curable urethane resin obtained had a weight-average molecular weight of 10000.

### [Synthesis Example 4]

100 parts by mass of polytetramethyleneether glycol (manufactured by Mitsubishi Chemical Corporation, trade name "PTMG-2000") as a polyol compound and 0.01 parts by mass of dibutyltin dilaurate were placed in a 500-mL separable flask and mixed in vacuo (20 mmHg or less) by stirring at 100°C for 30 minutes. Thereafter, the pressure was set to normal pressure, and 26.5 parts by mass of diphenylmethane diisocyanate (manufactured by Nisso Shoji Co., Ltd., trade name "Pure MDI") as a polyisocyanate compound were added thereto and reacted by stirring at 80°C for 3 hours to thereby obtain a moisture-curable urethane resin having an ether skeleton and having an aromatic isocyanate group at each end (ether-skeleton aromatic-terminated urethane). The moisture-curable urethane resin obtained had a weight-average molecular weight of 2700.

### [Synthesis Example 5]

100 parts by mass of polytetramethyleneether glycol (manufactured by Mitsubishi Chemical Corporation, trade name "PTMG-2000") as a polyol compound and 0.01 parts by mass of dibutyltin dilaurate were placed in a 500-mL separable flask and mixed in vacuo (20 mmHg or less) by stirring at 100°C for 30 minutes. Thereafter, the pressure was set to normal pressure, and 50 parts by mass of "Duranate A201H" (trade name) manufactured by Asahi Kasei Corporation as an aliphatic polyisocyanate compound were added and reacted by stirring at 80°C for 3 hours to thereby obtain a moisture-curable urethane resin having an ether skeleton and having an aliphatic isocyanate group at each end (ether-skeleton aliphatic-terminated urethane). The moisture-curable urethane resin obtained had a weight-average molecular weight of 3000.

The components other than the moisture-curable urethane resin used in each of Examples and Comparative Examples were as follows.

### (Radically polymerizable compound)

Urethane acrylate: manufactured by DAICEL-ALLNEX LTD., trade name "EBECRYL 8411", bifunctional, weight-average molecular weight: 12000, diluted with 20 mass% isobornyl acrylate (IBOA), the content of urethane acrylate: 80 mass%
Phenoxyethyl acrylate: manufactured by KYOEISHA CHEMICAL Co., LTD., trade name "Light acrylate PO-A", monofunctional
Lauryl acrylate: manufactured by KYOEISHA CHEMICAL Co., LTD., trade name "Light acrylate L-A", monofunctional
Photopolymerization initiator: 2-benzyl-2-dimethylamino-1-(4-morpholinophenyl)-butanone-1, manufactured by BASF SE, trade name "IRGACURE 369"
Moisture curing-accelerating catalyst: 2,2'-dimorpholino diethyl ether, manufactured by San-Apro Ltd., trade name "U-CAT 660M"
Coupling agent: 3-isocyanatepropyltriethoxysilane, manufactured by Shin-Etsu Chemical Co., Ltd., trade name "KBE-9007N"
Filler: trimethyl silylation-treated silica, manufactured by Nippon Aerosil Co., Ltd., trade name "R812", primary particle size: 7 nm

[Examples 1 to 8 and Comparative Examples 1 to 2] Examples 1 and 8 are reference examples not according claim 1.

The components were each stirred at a temperature of 50°C in a planetary stirring apparatus (manufactured by THINKY CORPORATION, "Awatori Rentaro") at a blend ratio described in Table 1 and then homogeneously mixed at 50°C in a ceramic triple roll mill to thereby obtain curable resin compositions of Examples 1 to 8 and Comparative Example 1.

**[Table 1]**

| | | | Example | | | | | | | | Comparative Example | |
|---|---|---|---|---|---|---|---|---|---|---|---|---|
| | | | 1 | 2 | 3 | 4 | 5 | 6 | 7 | 8 | 1 | 2 |
| | Moisture-curable resin (A) | PC-skeleton aromatic-terminated urethane | 50 | 25 | 30 | 30 | 25 | 36 | 35 | | | |
| | | PC-skeleton aliphatic-terminated urethane (1) | | 25 | 20 | | | 24 | 30 | | | |
| | | PC-skeleton aliphatic-terminated urethane (2) | | | | 20 | 25 | | | 50 | | |
| | | Ether-skeleton aromatic-terminated urethane | | | | | | | | | 50 | 25 |
| Composition (parts by mass) | | Ether-skeleton aliphatic-terminated urethane | | | | | | | | | | 25 |
| | Radically polymerizable compound | Urethane acrylate | 4 | 4 | 4 | 4 | 4 | 3 | 3 | 4 | 4 | 4 |
| | | Phenoxyethyl acrylate | 16 | 16 | 16 | 16 | 16 | 13 | 11 | 16 | 16 | 16 |
| | | Lauryl acrylate | 30 | 30 | 30 | 30 | 30 | 24 | 21 | 30 | 30 | 30 |
| | Photopolymerization initiator | | 1 | 1 | 1 | 1 | 1 | 1 | 1 | 1 | 1 | 1 |
| | Moisture curing-accelerating catalyst | | 1 | 1 | 1 | 1 | 1 | 1 | 1 | 1 | 1 | 1 |
| | Coupling agent | | 1 | 1 | 1 | 1 | 1 | 1 | 1 | 1 | 1 | 1 |
| | Filler | | 5 | 5 | 5 | 5 | 5 | 5 | 5 | 5 | 5 | 5 |
| Content | Content of moisture-curable resin (A) (mass%) | | 47% | 47% | 47% | 47% | 47% | 56% | 60% | 47% | 47% | 47% |
| | Content of radically polymerizable compound (mass%) | | 47% | 47% | 47% | 47% | 47% | 37% | 33% | 47% | 47% | 47% |
| | Radically polymerizable compound/moisture-curable resin (A) (mass ratio) | | 1 | 1 | 1 | 1 | 1 | 0.67 | 0.54 | 1 | 1 | 1 |
| Physical properties | Adhesive force (25°C/[MPa], Al/G) | | 6.8 | 4.4 | 5.1 | 5 | 4.9 | 6.1 | 4.5 | 1.4 | 3.2 | 0.5 |
| | Storage elastic modulus at an elongation percentage of 25% [MPa] | | 0.85 | 0.29 | 0.38 | 0.15 | 0.22 | 0.38 | 0.4 | 0.12 | 0.41 | 0.1 |
| | Tensile storage elastic modulus before heat treatment E'1 [MPa] | | 2.7 | 1.85 | 1.96 | 1.98 | 1.88 | 2.56 | 2.62 | 0.38 | 1.74 | 0.8 |
| | Tensile storage elastic modulus after heat treatment E'2 [MPa] | | 2.6 | 1.77 | 1.9 | 1.95 | 1.8 | 2.53 | 2.6 | 0.6 | 0.95 | 0 |
| | Change rate of the tensile storage elastic modulus [%] | | -3.7 | -4.3 | -3.1 | -1.5 | -4.3 | -1.2 | -0.8 | +57.9 | -45.4 | -100.0 |
| Evaluation | Heat resistance (difference in adhesive force DMPa) | | 2.9 | 3 | 3 | 2.9 | 3.1 | 2.8 | 3 | 3.8 | -0.8 | -0.5 |
| | Weather resistance (difference in the yellowness DYI) | | 4.0 | 3.3 | 3.6 | 1.0 | 3.2 | 4.6 | 0.5 | 1.0 | 11.0 | 6.0 |
| | Moisture resistance (adhesive force after PC test/adhesive force before PC test) | | 1.10 | 1.07 | 1.08 | 1.08 | 1.07 | 1.08 | 1.07 | 1.00 | 0.60 | 0.00 |
| | Durability (cooling/heating cycle test, adhesive force [MPa]) | | B | A | A | A | A | A | A | A | A | A |

As shown in Table 1, the curable resin composition of each Example has a lower decrease rate of the tensile storage elastic modulus and also a lower storage elastic modulus at an elongation percentage of 25% by use of the moisture-curable resin having a polycarbonate skeleton. Thus, it was possible to make the heat resistance, weather resistance, and moisture resistance excellent and also make durability of the adhesive force good. In contrast, in Comparative Examples, the decrease rate of the tensile storage elastic modulus increased, or the storage elastic modulus at an elongation percentage of 25% increased. Thus, it was not possible to make durability of the adhesive force good while making the heat resistance, weather resistance, and moisture resistance excellent.

## Claims

1. A cured body of a curable resin composition comprising a moisture-curable resin (A), wherein a cured product of the curable resin composition has a storage elastic modulus of 5 MPa or less at an elongation percentage of 25%,
wherein the moisture-curable resin (A) comprises a compound having an aliphatic isocyanate group (A1) and a compound having an aromatic isocyanate group (A2),
the compound having an aliphatic isocyanate group (A1) and the compound having an aromatic isocyanate group (A2) respectively have a polycarbonate skeleton, and
wherein a mass ratio of the compound (A2) with respect to the compound (A1) (A2/A1) is 0.1 or more and 3.0 or less,
wherein the storage elastic modulus at elongation percentage of 25% is measured as follows:
A cured product sample is obtained by irradiating the curable resin composition with ultraviolet rays at 1000 mJ/cm2 by an LED lamp to photo-cure the composition, and thereafter, leaving the photo-cured composition to stand at 25 °C and 50RH% for one day to moisture-cure the photo-cured composition;
The cured product sample obtained is stretched to an elongation percentage of 100% by a tensile tester;
The elastic modulus at an elongation percentage of 25% is determined on the tensile curve obtained and taken as the storage elastic modulus at an elongation percentage of 25%, wherein the measurement conditions include 25°C and a tensile rate of 5 mm/sec.

2. The cured body according to claim 1, wherein the
curable resin composition further comprises a radically polymerizable compound and a photopolymerization initiator.

3. The cured body according to claim 1 or 2, wherein a difference in yellowness (ΔYI) between the cured product after heating at 120°C for 100 hours and the cured product before heating is 7.0 or less. wherein the yellowness is measured by a transmission method using a spectrophotometer in compliance with JIS K7105.

## Patentansprüche

1. Ausgehärteter Körper einer härtbaren Harzzusammensetzung, umfassend ein feuchtigkeitshärtbares Harz (A), wobei ein ausgehärtetes Produkt der härtbaren Harzzusammensetzung einen Speichermodul von 5 MPa oder weniger bei einer Dehnung von 25% aufweist,
wobei das feuchtigkeitshärtbare Harz (A) eine Verbindung mit einer aliphatischen Isocyanatgruppe (A1) und eine Verbindung mit einer aromatischen Isocyanatgruppe (A2) umfasst,
wobei die Verbindung mit einer aliphatischen Isocyanatgruppe (A1) und die Verbindung mit einer aromatischen Isocyanatgruppe (A2) jeweils ein Polycarbonatgerüst aufweisen, und
wobei das Massenverhältnis der Verbindung (A2) zur Verbindung (A1) (A2/A1) 0,1 oder mehr und 3,0 oder weniger beträgt,
wobei der Speichermodul bei einer Dehnung von 25% wie folgt gemessen wird:
Eine ausgehärtete Produktprobe wird erhalten, indem die härtbare Harzzusammensetzung mit ultravioletten Strahlen von 1000 mJ/cm² mittels einer LED-Lampe bestrahlt wird, um die Zusammensetzung durch Lichthärtung auszuhärten, und die durch Lichthärtung ausgehärtete Zusammensetzung anschließend einen Tag lang bei 25°C und 50% r. F. stehen gelassen wird, um die durch Lichthärtung ausgehärtete Zusammensetzung durch Feuchtigkeit auszuhärten;
Die erhaltene ausgehärtete Produktprobe wird mit einem Zugprüfgerät auf eine Dehnung von 100% gedehnt;
Der Elastizitätsmodul bei einer Dehnung von 25% wird anhand der erhaltenen Zugkurve bestimmt und als Speichermodul bei einer Dehnung von 25% angenommen, wobei die Messbedingungen 25°C und eine Zuggeschwindigkeit von 5 mm/s umfassen.

2. Ausgehärteter Körper nach Anspruch 1, wobei die
härtbare Harzzusammensetzung ferner eine radikalisch polymerisierbare Verbindung und einen Photopolymerisationsinitiator umfasst.

3. Ausgehärteter Körper nach Anspruch 1 oder 2, wobei der Unterschied im Gelbton (ΔYI) zwischen dem ausgehärteten Produkt nach 100 Stunden Erhitzen bei 120°C und dem gehärteten Produkt vor dem Erhitzen 7,0 oder weniger beträgt, wobei der Gelbton mittels Transmissionsmessung mit einem Spektralphotometer gemäß JIS K7105 gemessen wird.

## Revendications

1. Corps durci d'une composition de résine durcissable comportant une résine durcissable à l'humidité (A), dans lequel un produit durci de la composition de résine durcissable présente un module de cisaillement élastique de 5 MPa ou moins à un pourcentage d'allongement de 25 %,
dans lequel la résine durcissable à l'humidité (A) comporte un composé possédant un groupe isocyanate aliphatique (A1) et un composé possédant un groupe isocyanate aromatique (A2),
le composé possédant un groupe isocyanate aliphatique (A1) et le composé possédant un groupe isocyanate aromatique (A2) ont respectivement un squelette de polycarbonate, et
dans lequel un rapport massique du composé (A2) par rapport au composé (A1) (A2/A1) est de 0,1 ou plus et de 3,0 ou moins,
dans lequel le module de cisaillement élastique à un pourcentage d'allongement de 25 % est mesuré comme suit :
un échantillon de produit durci est obtenu en soumettant la composition de résine durcissable à des rayons ultraviolets à 1 000 mJ/cm² par une lampe à LED pour durcir par photopolymérisation la composition, et en laissant ensuite reposer la composition durcie par photopolymérisation à 25 °C et à 50 % de HR pendant une journée pour durcir à l'humidité la composition durcie par photopolymérisation ;
l'échantillon de produit durci obtenu est étiré jusqu'à un pourcentage d'allongement de 100 % par une machine d'essai de traction ;
le module d'élasticité à un pourcentage d'allongement de 25 % est déterminé sur la courbe de traction obtenue et est pris comme module de cisaillement élastique à un pourcentage d'allongement de 25 %, dans lequel les conditions de mesure incluent 25 °C et une vitesse de traction de 5 mm/s.

2. Corps durci selon la revendication 1, dans lequel la composition de résine durcissable comporte en outre un composé pouvant être soumis à une polymérisation radicalaire et un initiateur de photopolymérisation.

3. Corps durci selon la revendication 1 ou 2, dans lequel une différence d'indice de jaunissement (ΔYI) entre le produit durci après chauffage à 120 °C pendant 100 heures et le produit durci avant chauffage est de 7,0 ou moins, dans lequel l'indice de jaunissement est mesuré par un procédé de transmission utilisant un spectrophotomètre conforme à la norme JIS K7105.
